# FASCICULE DE BREVET EUROPEEN

(11) **EP 3 519 461 B1**
(45) Date de publication et mention de la délivrance du brevet: **07.06.2023**
(21) Numéro de dépôt: 17777617.6
(22) Date de dépôt: 14.09.2017
(51) Int. Cl.: C08F 120/06, C08F 220/06, C08F 4/40, C08F 2/10

(54) **PROCÉDÉ DE PRÉPARATION D'UN POLYMÈRE**
VERFAHREN ZUR HERSTELLUNG EINES POLYMERS
METHOD FOR PREPARING A POLYMER

(30) Priorité: 29.09.2016 FR 1659287
(43) Date de publication de la demande: 07.08.2019
(73) Titulaire: Coatex, 69730 Genay (FR)
(72) Inventeur: CHAMPAGNE, Clémentine, 69300 Caluire-et-Cuire (FR); SUAU, Jean-Marc, 69480 Lucenay (FR)
(74) Mandataire: Balmefrezol, Ludovic Francis Pierre
(86) Numéro de dépôt international: PCT/FR2017/052449
(87) Numéro de publication internationale: WO 2018/060563

(56) Documents cités:
- WO-A1-2016/066916
- DATABASE WPI Week 199530 Thomson Scientific, London, GB; AN 1995-228704 XP002768788, & JP H07 138304 A (ASAHI KASEI KOGYO KK) 30 mai 1995 (1995-05-30)

## Description

L'invention concerne la préparation d'un polymère hydrosoluble, dont la masse moléculaire en poids Mw va de 1 000 à 10 000 g/mol et dont l'indice de polydispersité Iₚ est inférieur à 3,5. Le polymère selon l'invention est obtenu par réaction de polymérisation dans l'eau d'un monomère anionique insaturé, en présence de Cu^{I} ou de Cu^{II} et d'un composé aromatique comprenant une fonction choisie parmi hydroxyle, amine primaire, amine secondaire et amine ternaire directement liée au cycle aromatique.

L'invention concerne également une composition aqueuse comprenant le polymère selon l'invention.

On connaît de nombreux procédés de préparation de polymères à partir de monomères, en particulier à partir de monomères anioniques. De manière générale, lors de la préparation de ces polymères, il faut rechercher un contrôle de la masse moléculaire en poids Mw du polymère préparé. En particulier, il est important de pouvoir obtenir des polymères dont la masse moléculaire en poids est relativement faible. De même, il faut contrôler l'indice de polydispersité Iₚ des polymères préparés. En particulier, cet indice doit être faible. Lors des réactions de polymérisation mises enjeu, il est important de pouvoir éliminer ou de pouvoir fortement limiter l'utilisation d'agent de transfert de chaîne.

Lors de la préparation de tels polymères à partir de monomères comprenant au moins une insaturation oléfinique polymérisable, il est important que les polymères obtenus comprennent de faibles teneurs en sels, notamment en sulfates ou en sels de phosphore, voire que ces polymères soient significativement exempts de tels sels.

L'absence de solvant organique résiduel au sein de ces polymères est également importante.

La limitation ou l'élimination de la présence de sulfure de carbone ou de sulfure d'hydrogène au sein des polymères préparés est également une caractéristique importante de ces procédés de préparation.

WO 2016 066916 et JP H07 138304 concernent la préparation de polymères acryliques mais ne mentionnent aucunement la présence avantageuse au cours de cette préparation d'un composé aromatique particulier.

Le procédé de préparation du polymère selon l'invention permet d'apporter une solution à tout ou partie des problèmes des procédés de l'état de la technique.

Ainsi, l'invention fournit un procédé de préparation d'un polymère hydrosoluble, dont la masse moléculaire en poids Mw va de 1 000 à 10 000 g/mol et dont l'indice de polydispersité Iₚ est inférieur à 3,5, par réaction de polymérisation dans l'eau, à une température supérieure à 60°C, d'au moins un monomère principal comprenant au moins une insaturation oléfinique polymérisable, en présence :
- d'au moins un dérivé métallique, complexé, lié à au moins un ligand ou sous forme ionique et comprenant :
   o au moins un élément (M) choisi parmi Cu^{I} et Cu^{II} ; ou
   o au moins un composé précurseur d'un élément (M) ;
- d'au moins un composé aromatique (A) comprenant au moins une fonction (F) choisie parmi hydroxyle, amine primaire, amine secondaire et amine ternaire directement liée au cycle aromatique, en une quantité équivalente à au moins 300 ppm molaire de fonction (F) par rapport à la quantité molaire de monomère principal ; et
- d'au moins un composé initiateur choisi parmi peroxyde d'hydrogène, persulfate de sodium, persulfate de potassium, persulfate d'ammonium, hydroperoxyde d'alkyle et leurs mélanges.

De manière préférée, le polymère préparé selon l'invention a une masse moléculaire en poids Mw inférieure à 9 000 g/mol. De manière plus préférée, la masse moléculaire en poids Mw du polymère préparé est inférieure à 7 000 g/mol ou inférieure à 6 000 g/mol.

De manière également préférée, le polymère préparé selon l'invention a une masse moléculaire en poids Mw supérieure à 1 200 g/mol. De manière plus préférée, la masse moléculaire en poids Mw du polymère préparé est supérieure à 1 500 g/mol.

Ainsi, la masse moléculaire en poids Mw du polymère peut être comprise entre 1 000 et 9 000 g/mol ou entre 1 000 et 8 000 g/mol ou encore entre 1 000 et 6 000 g/mol. De préférence, la masse moléculaire en poids Mw du polymère peut être comprise entre 1 200 et 9 000 g/mol ou entre 1200 et 8 000 g/mol ou encore entre 1200 et 6 000 g/mol. De manière également préférée, la masse moléculaire en poids Mw du polymère peut être comprise entre 1 500 et 9 000 g/mol ou entre 1 500 et 8 000 g/mol ou encore entre 1 500 et 6 000 g/mol.

L'indice de polydispersité Iₚ du polymère préparé selon l'invention est inférieur à 3,5. De manière préférée, l'indice de polydispersité Iₚ est inférieur à 3. Selon l'invention, cet indice de polydispersité Iₚ peut être compris entre 2 et 3,5 ou entre 2 et 3 ou encore entre 2,2 et 3. Il peut également être compris entre 2,4 et 3, entre 2,6 et 3, ou bien encore entre 2,2 et 2,8 ou entre 2,2 et 2,6.

Le procédé selon l'invention est réalisé en milieu aqueux. De manière préférée, il peut être mis en oeuvre en l'absence de solvant organique. De manière avantageuse, le procédé selon l'invention peut être mis en oeuvre dans de l'eau brute ou dans de l'eau bipermutée. Il peut également être mis en oeuvre dans de l'eau du réseau ou bien dans de l'eau qui n'est pas adoucie ou purifiée. Il peut également être mis en oeuvre dans de l'eau industrielle.

De manière également avantageuse, le procédé selon l'invention peut être mis en oeuvre en l'absence d'agent de transfert de chaîne.

De manière particulièrement avantageuse lors de la mise en oeuvre du procédé selon l'invention, le milieu réactionnel ne comprend pas ou peu de sels. En particulier, le milieu réactionnel comprend peu de sels choisis parmi sulfates, sulfites, phosphates, phosphites, hypophosphites. Ces sels pourraient conduire à une altération du polymère préparé selon l'invention. De préférence, le milieu réactionnel comprend une quantité massique de sulfates, de sulfites, de phosphates, de phosphites ou d'hypophosphites qui est inférieure à 6 000 ppm, de préférence inférieure à 5 000 ppm ou à 4 000 ppm, voire inférieure à 1 000 ppm, par rapport à la quantité en poids de monomère principal.

Le procédé selon l'invention comprend la mise en œuvre d'au moins un dérivé métallique comprenant un élément (M) ou bien un précurseur d'un tel élément (M). Le dérivé métallique peut être sous différentes formes. En effet, au sein du dérivé métallique, l'élément (M) peut être complexé ou lié à au moins un ligand ou encore être sous forme ionique. De manière préférée, l'élément (M) est sous forme ionique.

Comme dérivé métallique selon l'invention, on préfère un composé choisi parmi carbonate de cuivre, carbonate de cuivre hydraté, carbonate de cuivre hemi-hydraté, acétate de cuivre, sulfate de cuivre, sulfate de cuivre pentahydraté, hydroxyde de cuivre, halogénure de cuivre.

Outre l'élément (M) ou un précurseur d'un élément (M) présent au sein du dérivé métallique, le procédé selon l'invention peut également mettre en oeuvre au moins un autre élément, de préférence au moins un élément choisi parmi Fe^{II}, Fe^{III}, Co^{II}, Mn^{II}, Ni^{II}. Fe^{II} et Fe^{III} sont les éléments supplémentaires préférés. Ils peuvent être mis en oeuvre sous la forme d'au moins un composé choisi parmi sulfate de fer, sulfate de fer hydraté, sulfate de fer hemi-hydraté, sulfate de fer heptahydraté, carbonate de fer, carbonate de fer hydraté, carbonate de fer hemi-hydraté, chlorure de fer. Comme autres composés utiles pour la mise en oeuvre des éléments supplémentaires, on peut choisir l'acétate de manganèse tetrahydraté et le sulfate de cobalt heptahydraté.

Selon l'invention, l'élément (M) peut également être associé à au moins un composé précurseur d'un élément choisi parmi Fe^{II}, Fe^{III}, Co^{II}, Mn^{II}, Ni^{II}. Deux éléments (M) peuvent également être associés à au moins un composé précurseur d'un élément choisi parmi Fe^{II}, Fe^{III}, Co^{II}, Mn^{II}, Ni^{II}. Comme composés précurseurs des éléments choisis parmi Fe^{II}, Fe^{III}, Co^{II}, Mn^{II}, Ni^{II}, on peut citer le sulfate de fer, le sulfate de fer hydraté, le sulfate de fer hemi-hydraté, le sulfate de fer heptahydraté, le carbonate de fer, le carbonate de fer hydraté, le carbonate de fer hemi-hydraté, le chlorure de fer, l'acétate de manganèse tetrahydraté et le sulfate de cobalt heptahydraté.

Le procédé selon l'invention peut également mettre en oeuvre un composé précurseur d'un élément (M) associé à au moins un élément choisi parmi Fe^{II}, Fe^{III}, Co^{II}, Mn^{II}, Ni^{II} ou associé à au moins un composé précurseur d'un élément choisi parmi Fe^{II}, Fe^{III}, Co^{II}, Mn^{II}, Ni^{II}.

Lors de l'utilisation d'un précurseur d'un élément (M) ou d'un élément choisi parmi Fe^{II}, Fe^{III}, Co^{II}, Mn^{II}, Ni^{II}, le procédé selon l'invention peut également mettre en œuvre un composé réducteur de l'un ou l'autre des composés précurseurs.

Ainsi, le procédé selon l'invention peut mettre en oeuvre un élément (M) et au moins un composé précurseur d'un élément choisi parmi Fe^{II}, Fe^{III}, Co^{II}, Mn^{II}, Ni^{II} associé à un composé réducteur du composé précurseur. Il peut également mettre en oeuvre un composé précurseur d'un élément (M) associé à un composé réducteur du composé précurseur ou encore un composé précurseur d'un élément (M) associé à un composé réducteur du composé précurseur et au moins un élément choisi parmi Fe^{II}, Fe^{III}, Co^{II}, Mn^{II}, Ni^{II} ou bien encore un composé précurseur d'un élément (M) et au moins un composé précurseur d'un élément choisi parmi Fe^{II}, Fe^{II}, Co^{II}, Mn^{II}, Ni^{II} associés à un composé réducteur de composé précurseur.

En présence d'un composé réducteur, le composé précurseur de l'élément (M) ou bien le composé précurseur d'un élément choisi parmi Fe^{II}, Fe^{III}, Co^{II}, Mn^{II}, Ni^{II} permet d'obtenir, de préférence *in situ,* un élément choisi parmi Cu^{I}, Cu^{II}, Fe^{II}, Fe^{III}, Co^{II}, Mn^{II}, Ni^{II}.

De manière préférée, le procédé selon l'invention met en œuvre Cu^{I} et Cu^{II}, seuls ou combinés. De manière également préférée, le procédé selon l'invention met en oeuvre Cu^{I} et Fe", Cu^{II} et Fe^{II}, Cu^{I} et Fe^{III}, Cu^{II} et Fe^{III}, Cu^{I} et Co^{II}, Cu^{I} et Mn^{II}, Cu^{I} et Ni^{II}, Cu^{II} et Co^{II}, Cu^{II} et Mn^{II}, Cu^{II} et Ni^{II}. De manière particulièrement préférée, le procédé selon l'invention met en oeuvre Cu^{I} et Fe^{II}, Cu^{II} et Fe^{II}, Cu^{I} et Fe^{III} ou Cu^{II} et Fe^{III}.

La quantité de dérivé métallique utilisé pour le procédé selon l'invention peut varier de manière relativement importante. De manière générale pour l'invention, le procédé selon l'invention met en oeuvre une quantité molaire de dérivé métallique qui est déterminée en fonction du nombre d'insaturations oléfiniques du monomère principal mis en oeuvre. De manière préférée, le procédé selon l'invention met en oeuvre une quantité molaire de dérivé métallique allant de 200 à 5 000 ppm, de préférence de 250 à 4 000 ppm, par rapport à la quantité molaire de monomère principal.

De manière analogue, la quantité d'élément choisi parmi Fe^{II}, Fe^{III}, Co^{II}, Mn^{II}, Ni^{II} peut varier de manière relativement large. De manière préférée, le procédé selon l'invention met en oeuvre une quantité de cet élément supplémentaire allant de 100 à 3 000 ppm molaire ou de 150 à 2 500 ppm molaire, par rapport à la quantité molaire de monomère principal.

De manière également préférée pour le procédé selon l'invention, l'élément supplémentaire peut être mis en oeuvre en un ratio molaire allant de 0,5 à 60 % molaire, de préférence de 2 à 55 % molaire, par rapport à la quantité d'élément (M).

Pour le procédé selon l'invention, les quantités de composé précurseur de l'élément (M) ou de composé précurseur de l'élément supplémentaire sont déterminées à partir des quantités respectives de l'élément (M) ou de l'élément supplémentaire qui doivent être mises en oeuvre.

Outre un dérivé métallique particulier, le procédé selon l'invention met également en oeuvre au moins un composé aromatique (A) comprenant au moins une fonction (F) qui est choisie parmi hydroxyle, amine primaire, amine secondaire et amine ternaire. Selon l'invention, la fonction (F) est directement liée au cycle aromatique du composé aromatique (A). Le composé (A) peut comprendre plusieurs cycles dont l'un au moins est un cycle aromatique. La fonction (F) est alors directement liée à un de ces cycles aromatiques.

Selon l'invention, le composé (A) peut comprendre une ou plusieurs fonctions (F).

De manière préférée selon l'invention, le composé aromatique (A) est un composé hydroxyle. Plus préférentiellement, il est choisi parmi benzoquinone, hydroquinone, catechol, pyrocatechol, *tertio*-butylpyrocatechol, acide gallique, acide tannique, liqueur tannique, acide 4-hyroxybenzoïque, 4-aminophénol, acide salycilique, acide syringique, dopamine ou dopamine-HCl, resorcinol, lignosulfonate, curcumine, paraméthoxyphénol, anthocyanidols, acide humique et leurs mélanges.

Selon l'invention, le composé (A) peut également être le dérivé cétonique du composé aromatique hydroxylé. Un tel dérivé cétonique peut notamment être choisi parmi les quinones.

Pour le procédé selon l'invention, la quantité de composé (A) est déterminée par rapport aux nombres de fonctions (F) mises en oeuvre. Ainsi, le procédé selon l'invention met en oeuvre le composé aromatique (A) en une quantité équivalente à au moins 300 ppm molaire de fonction (F) directement liée au cycle aromatique, par rapport à la quantité molaire de monomère principal. De manière préférée, la quantité de composé aromatique (A) mise en oeuvre correspond à une quantité équivalente à au moins 325 ppm molaire, de préférence à au moins 350 ppm molaire, de fonction (F) par rapport à la quantité molaire de monomère anionique.

Pour le procédé selon l'invention, cette quantité peut être supérieure à 500, 1 000 ou 5 000 ppm par rapport à la quantité molaire de monomère anionique. Elle peut atteindre ou dépasser 10 000 ppm par rapport à la quantité molaire de monomère principal.

De manière générale pour l'invention, le procédé selon l'invention met en oeuvre une quantité molaire de composé aromatique (A) qui est déterminée en fonction du nombre d'insaturations oléfiniques du monomère anionique mis en oeuvre.

Le polymère préparé selon le procédé de l'invention est obtenu par réaction de polymérisation dans l'eau d'au moins un monomère principal comprenant au moins une insaturation oléfinique polymérisable. Pour le monomère anionique, l'insaturation oléfinique polymérisable est préférentiellement une insaturation éthylénique polymérisable.

De manière préférée, le monomère principal est un monomère anionique et notamment un monomère anionique comprenant au moins une insaturation oléfinique polymérisable, de préférence une fonction vinylique polymérisable et au moins une fonction acide carboxylique. Ainsi et de manière particulièrement préférée, le polymère selon l'invention est un polymère anionique.

Plus préférentiellement, le monomère anionique est choisi parmi l'acide acrylique, et l'acide méthacrylique, un sel d'acide acrylique, un sel d'acide méthacrylique. Lors de la mise en oeuvre du procédé selon l'invention, ces monomères préférés peuvent être associés à un acide choisi parmi l'acide maléique, l'acide itaconique, l'acide crotonique, un sel d'acide maléique, un sel d'acide itaconique, un sel d'acide crotonique et leurs mélanges. Le monomère anionique préféré selon l'invention est l'acide acrylique, utilisé seul ou associé à un autre comonomère.

Le procédé selon l'invention peut également comprendre la mise en oeuvre d'au moins un comonomère choisi parmi AMPS, méthacrylate de 2-sulfoéthyl, méthallyl sulfonate de sodium, styrène sulfonate, leurs sels et un comonomère non-ionique.

Selon l'invention, l'AMPS est l'acide 2-acrylamido-2-méthylpropane sulfonique (AMPS) ou un de ses sels, par exemple un sel choisi parmi les sels de métaux alcalins tels les sels de sodium, de potassium ou de lithium, les sels de métaux alcalino-terreux tels les sels de calcium ou de magnésium, les sels d'ammonium, les sels d'ammonium alkylés tel les sels de 2-amino-2-méthyl-1-propanol (AMP), d'éthanolamine, de diéthanolamine, de triéthanolamine. Les sels d'AMPS préférés sont les sels de sodium et d'ammonium.

Le comonomère non-ionique peut être choisi parmi les esters d'un acide choisi parmi l'acide acrylique, l'acide méthacrylique, l'acide maléique, l'acide itaconique, l'acide crotonique et leurs mélanges. De manière préférée, le comonomère non-ionique peut être choisi parmi les esters d'un acide choisi parmi l'acide acrylique et l'acide méthacrylique. De manière avantageuse, le comonomère est mis en œuvre en une quantité en poids inférieure à la quantité de monomère principal.

Lors de la mise en oeuvre d'au moins un comonomère, le procédé selon l'invention met en œuvre une quantité de dérivé métallique qui est déterminée en fonction du nombre d'insaturations oléfiniques du monomère principal et du comonomère mis en oeuvre.

De manière avantageuse, le procédé selon l'invention met en œuvre au moins un composé initiateur choisi parmi peroxyde d'hydrogène, persulfate de sodium, persulfate de potassium, persulfate d'ammonium, hydroperoxyde d'alkyle et leurs mélanges. Le composé initiateur préféré est le peroxyde d'hydrogène.

De manière avantageuse pour le procédé selon l'invention, le polymère obtenu peut être neutralisé. Le procédé selon l'invention peut donc également comprendre la neutralisation totale ou partielle du polymère préparé. De manière préférée, la neutralisation du polymère est effectuée au moyen d'au moins un composé choisi parmi hydroxydes de métal alcalin, hydroxydes de métal alcalino-terreux, hydroxyde d'ammonium, dihydroxydes de métal alcalino-terreux, amines, oxydes métalliques, notamment oxyde de calcium, oxyde de magnésium et oxyde de zinc, et leurs mélanges. La neutralisation totale ou partielle au moyen de soude ou de potasse est préférée.

L'invention concerne également la composition de milieu réactionnel mis en oeuvre pour le procédé selon l'invention. Ainsi, l'invention fournit également une composition comprenant :
- au moins un monomère principal comprenant au moins une insaturation oléfinique polymérisable ;
- au moins un dérivé métallique, complexé, lié à au moins un ligand ou sous forme ionique et comprenant :
   o au moins un élément (M) choisi parmi Cu^{I} et Cu^{II} ; ou
   o au moins un composé précurseur d'un élément (M) ;
- au moins un composé aromatique (A) comprenant au moins une fonction (F) choisie parmi hydroxyle, amine primaire, amine secondaire et amine ternaire directement liée au cycle aromatique, en une quantité équivalente à au moins 300 ppm molaire de fonction (F) par rapport à la quantité molaire de monomère principal ; et
- d'au moins un composé initiateur choisi parmi peroxyde d'hydrogène, persulfate de sodium, persulfate de potassium, persulfate d'ammonium, hydroperoxyde d'alkyle et leurs mélanges.

La composition selon l'invention peut comprendre au moins un monomère principal anionique et également de l'eau.

L'utilisation de la composition selon l'invention pour la préparation d'un polymère hydrosoluble, de préférence d'un polymère anionique hydrosoluble, fait également partie de l'invention.

Outre un procédé de préparation, l'invention concerne également le polymère préparé lors de la mise en oeuvre de ce procédé. Ainsi, l'invention concerne un polymère d'au moins un monomère principal comprenant au moins une insaturation oléfinique polymérisable, dont la masse moléculaire Mw est inférieure à 10 000 g/mol et dont l'indice de polydispersité Iₚ est inférieur à 3,5. Selon l'invention, le polymère peut être sous forme acide ou sous forme neutralisée. Le polymère selon l'invention sous forme acide peut être neutralisé au moyen d'au moins un composé choisi parmi hydroxydes de métal alcalin, hydroxydes de métal alcalino-terreux, hydroxyde d'ammonium, dihydroxydes de métal alcalino-terreux, amines, oxydes métalliques, notamment oxyde de calcium, oxyde de magnésium et oxyde de zinc, et leurs mélanges. La neutralisation totale ou partielle au moyen de soude ou de potasse est préférée.

De manière particulièrement avantageuse, le polymère selon l'invention ne comprend pas de composé organique volatil résiduel.

De manière également particulièrement avantageuse, le polymère selon l'invention comprend une quantité de sel choisi parmi sulfates, sulfites, phosphates, phosphites, hypophosphites qui est inférieure à 2 000 ppm par rapport à la quantité de monomère principal. Préférentiellement, cette quantité est inférieure à 1 500 ppm voire inférieure à 1 000 ppm, par rapport à la quantité de monomère principal.

Les caractéristiques particulières, avantageuses ou préférées définies pour le procédé selon l'invention définissent des polymères, compositions ou utilisations selon l'invention qui sont particuliers, avantageux ou préférés.

Selon l'invention, la masse moléculaire des polymères est déterminée par chromatographie d'exclusion stérique (CES) ou en anglais « Gel Permeation Chromatography » (GPC). Cette technique met en oeuvre un appareil de chromatographie liquide de marque Waters doté d'un détecteur. Ce détecteur est un détecteur de concentration réfractométrique de marque Waters. Cet appareillage de chromatographie liquide est doté d'une colonne d'exclusion stérique afin de séparer les différents poids moléculaires des copolymères étudiés. La phase liquide d'élution est une phase aqueuse ajustée à pH 9,00 au moyen de soude 1N contenant 0,0 5M de NaHCO₃, 0,1M de NaNO₃, 0,02 M de triéthanolamine et 0,03 % de NaN₃.

Selon une première étape, on dilue à 0,9 % sec la solution de copolymère dans le solvant de solubilisation de la CES, qui correspond à la phase liquide d'élution de la CES à laquelle est ajoutée 0,04 % de diméthylformamide qui joue le rôle de marqueur de débit ou étalon interne. Puis, on filtre à 0,2 µm. 100 µL sont ensuite injectés dans l'appareil de chromatographie (éluant : une phase aqueuse ajustée à pH 9,00 par de la soude 1N contenant 0,05 M de NaHCCh, 0,1 M de NaNO₃, 0,02 M de triéthanolamine et 0,03 % de NaN₃).

L'appareil de chromatographie liquide contient une pompe isocratique (Waters 515) dont le débit est réglé à 0,8 mL/min. L'appareil de chromatographie comprend également un four qui lui-même comprend en série le système de colonnes suivant : une précolonne de type Guard Column Ultrahydrogel Waters de 6 cm de longueur et 40 mm de diamètre intérieur, et une colonne linéaire de type Ultrahydrogel Waters de 30 cm de longueur et 7,8 mm de diamètre intérieur. Le système de détection se compose d'un détecteur réfractométrique de type RI Waters 410. Le four est porté à la température de 60°C et le réfractomètre est porté à la température de 45°C.

L'appareil de chromatographie est étalonné au moyen d'étalons de polyacrylate de sodium en poudre de différentes masses moléculaires certifiées par le fournisseur : Polymer Standards Service ou American Polymers Standards Corporation.

Les exemples qui suivent permettent d'illustrer les différents aspects de l'invention.

Dans un réacteur de 1 000 mL équipé d'une agitation mécanique, d'un chauffage par bain d'huile et d'un système de mesure de la température permettant la régulation thermique, on charge un mélange (1) défini selon les tableaux 1, 2 et 3. Le composé aromatique (A) est introduit dans le réacteur (1). Le réacteur est alors chauffé à une température de 93 ± 2°C.

Lorsque cette température est atteinte, des pompes péristaltiques équipant le réacteur permettent d'injecter simultanément le mélange (2) et le mélange (3) préparés préalablement et définis selon les tableaux 1, 2 et 3. On maintient une température de 93 ± 2°C.

La durée d'injection du mélange (1) est de 120 min et la durée d'injection du mélange (3) est de 150 min. Une fois les injections achevées, on laisse le réacteur refroidir.

Masse moléculaire en poids Mw et indice de polydispersité Iₚ sont mesurés et calculés après neutralisation totale à la soude des échantillons de polymère préparé.

Les caractéristiques des polymères selon l'invention et de polymères comparatifs sont présentées dans les tableaux 1, 2 et 3 (quantités exprimées en g).

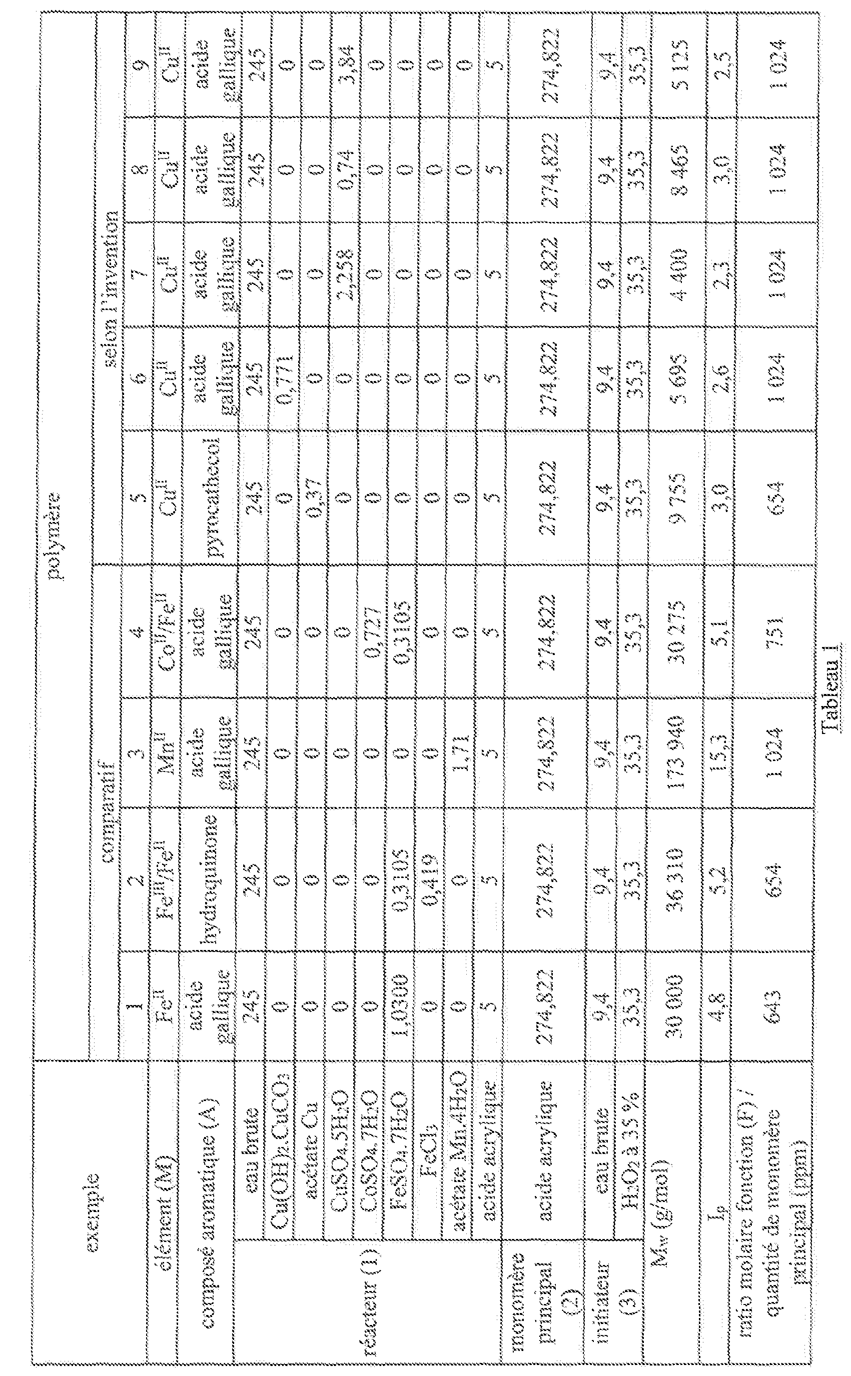

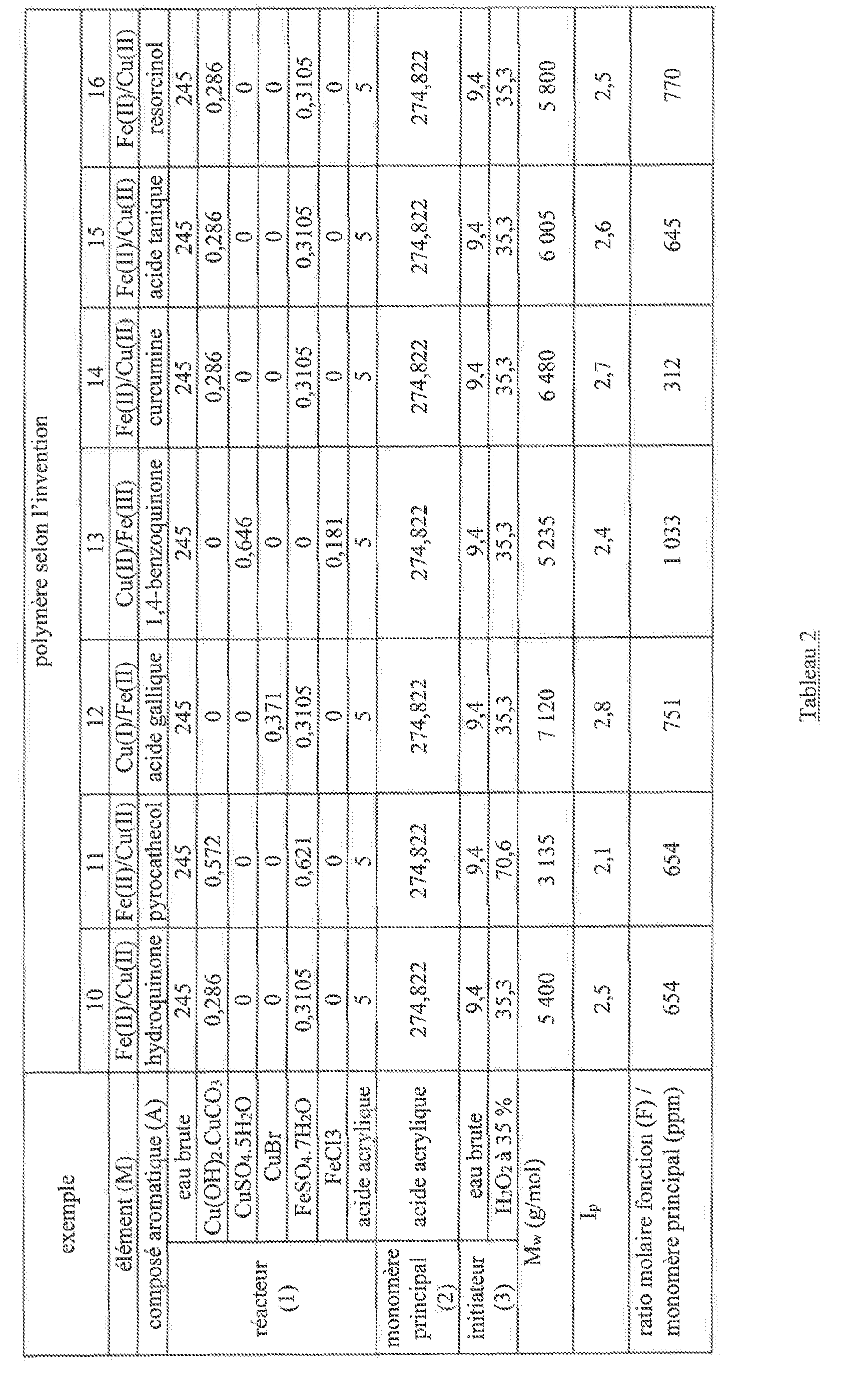

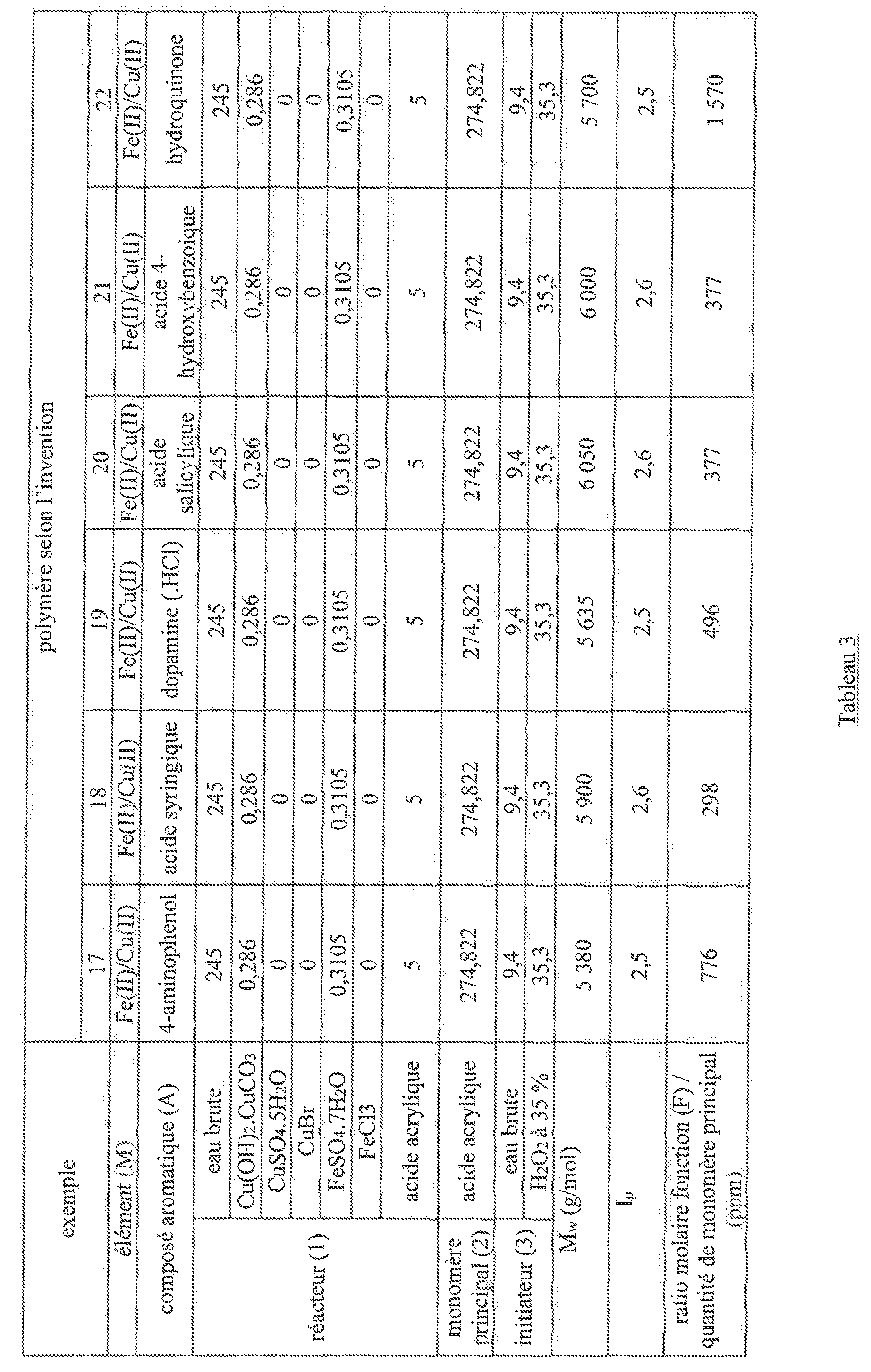

## Revendications

1. Procédé de préparation d'un polymère hydrosoluble, dont la masse moléculaire en poids Mw (déterminée par CES) va de 1 000 à 10 000 g/mol et dont l'indice de polydispersité Iₚ est inférieur à 3,5, par réaction de polymérisation dans l'eau, à une température supérieure à 60°C, d'au moins un monomère principal comprenant au moins une insaturation oléfinique polymérisable, en présence :
• d'au moins un dérivé métallique, complexé, lié à au moins un ligand ou sous forme ionique et comprenant :
o au moins un élément (M) choisi parmi Cu^{I} et Cu^{II} ; ou
o au moins un composé précurseur d'un élément (M) ;
• d'au moins un composé aromatique (A) comprenant au moins une fonction (F) choisie parmi hydroxyle, amine primaire, amine secondaire et amine ternaire directement liée au cycle aromatique, en une quantité équivalente à au moins 300 ppm molaire de fonction (F) par rapport à la quantité molaire de monomère principal ; et
• d'au moins un composé initiateur choisi parmi peroxyde d'hydrogène, persulfate de sodium, persulfate de potassium, persulfate d'ammonium, hydroperoxyde d'alkyle et leurs mélanges.

2. Procédé selon la revendication 1 pour lequel :
• la masse moléculaire en poids Mw du polymère est inférieure à 9 000 g/mol, de préférence inférieure à 7 000 ou inférieure à 6 000 g/mol ; ou
• la masse moléculaire en poids Mw du polymère est supérieure à 1 200 g/mol, de préférence supérieure à 1 500 g/mol ; ou
• l'indice de polydispersité Iₚ du polymère est inférieur à 3 ou est compris entre 2 et 3,5 ou entre 2 et 3 ou encore entre 2,2 et 3, entre 2,4 et 3, entre 2,6 et 3, ou bien encore entre 2,2 et 2,8 ou entre 2,2 et 2,6.

3. Procédé selon l'une des revendications 1 et 2 comprenant la mise en oeuvre :
• d'au moins un dérivé métallique choisi parmi carbonate de cuivre, carbonate de cuivre hydraté, carbonate de cuivre hemi-hydraté, acétate de cuivre, sulfate de cuivre, sulfate de fer, sulfate de fer hydraté, sulfate de fer hemi-hydraté, carbonate de fer, carbonate de fer hydraté, carbonate de fer hemi-hydraté, hydroxyde de cuivre ; ou
• du composé aromatique (A) en une quantité équivalente à au moins 325 ppm molaire, de préférence à au moins 350 ppm molaire, de fonction (F) par rapport à la quantité molaire de monomère principal.

4. Procédé selon l'une des revendications 1 à 3 mettant en oeuvre :
• un élément (M) et au moins un élément choisi parmi Fe^{II}, Fe^{III}, Co^{II}, Mn^{II}, Ni^{II}; ou
• un élément (M) et au moins un composé précurseur d'un élément choisi parmi Fe^{II}, Fe^{III}, Co^{II}, Mn^{II}, Ni^{II} ; ou
• un composé précurseur d'un élément (M) ; ou
• un composé précurseur d'un élément (M) et au moins un élément choisi parmi Fe^{II}, Fe^{III}, Co^{II}, Mn^{II}, Ni^{II} ; ou
• un composé précurseur d'un élément (M) et au moins un composé précurseur d'un élément choisi parmi Fe^{II}, Fe^{III}, Co^{II}, Mn^{II}, Ni^{II} ; ou
• un élément (M) et au moins un composé précurseur d'un élément choisi parmi Fe^{II}, Fe^{III}, Co^{II}, Mn^{II}, Ni^{II} associé à un composé réducteur du composé précurseur ; ou
• un composé précurseur d'un élément (M) associé à un composé réducteur du composé précurseur ; ou
• un composé précurseur d'un élément (M) associé à un composé réducteur du composé précurseur et au moins un élément choisi parmi Fe^{II}, Fe^{III}, Co^{II}, Mn^{II}, Ni^{II} ; ou
• un composé précurseur d'un élément (M) et au moins un composé précurseur d'un élément choisi parmi Fe^{II}, Fe^{III}, Co^{II}, Mn^{II}, Ni^{II} associés à un composé réducteur de composé précurseur.

5. Procédé selon l'une des revendications 1 à 4 pour lequel le composé aromatique (A) est hydroxylé et, de préférence, choisi parmi benzoquinone, hydroquinone, catechol, pyrocatechol, tertio-butylpyrocatechol, acide gallique, acide tannique, liqueur tannique, acide 4-hyroxybenzoique, 4-aminophénol, acide salycilique, acide syringique, dopamine ou dopamine-HCl, resorcinol, lignosulfonate, curcumine, paraméthoxyphénol, anthocyanidols, acide humique et leurs mélanges.

6. Procédé selon l'une des revendications 1 à 5 pour lequel le monomère principal est un monomère anionique, de préférence un monomère anionique comprenant au moins une insaturation oléfinique polymérisable, de préférence une fonction vinylique polymérisable, et au moins une fonction acide carboxylique, de préférence le monomère anionique est choisi parmi l'acide acrylique, et l'acide méthacrylique, un sel d'acide acrylique, un sel d'acide méthacrylique, éventuellement associé à un acide choisi parmi l'acide maléique, l'acide itaconique, l'acide crotonique, un sel d'acide maléique, un sel d'acide itaconique, un sel d'acide crotonique et leurs mélanges, plus préférentiellement l'acide acrylique.

7. Procédé selon l'une des revendications 1 à 6 comprenant également la mise en oeuvre d'au moins un comonomère, de préférence d'au moins un comonomère choisi parmi AMPS, méthacrylate de 2-sulfoéthyl, méthallyl sulfonate de sodium, styrène sulfonate, leurs sels et un comonomère non-ionique, plus préférentiellement choisi parmi les esters d'un acide choisi parmi l'acide acrylique, l'acide méthacrylique, l'acide maléique, l'acide itaconique, l'acide crotonique et leurs mélanges, encore plus préférentiellement l'acide acrylique et l'acide méthacrylique.

8. Procédé selon l'une des revendications 1 à 7 mis en oeuvre dans de l'eau brute ou dans de l'eau bipermutée.

9. Procédé selon l'une des revendications 1 à 8 réalisé en l'absence d'agent de transfert de chaîne ; ou bien réalisé en milieu aqueux ou bien encore réalisé en l'absence de solvant organique ou réalisé en milieu aqueux et en l'absence de solvant organique.

10. Procédé selon l'une des revendications 1 à 9 pour lequel le milieu réactionnel ne comprend pas ou peu, de préférence comprend une quantité massique inférieure à 6 000 ppm, de préférence inférieure à 5 000 ppm ou à 4 000 ppm, voire inférieure à 1 000 ppm, par rapport à la quantité massique de monomère principal, de sel choisi parmi sulfates, sulfites, phosphates, phosphites, hypophosphites.

11. Procédé selon l'une des revendications 1 à 10 comprenant également la neutralisation totale ou partielle du polymère, de préférence au moyen d'au moins un composé choisi parmi hydroxydes de métal alcalin, hydroxydes de métal alcalino-terreux, hydroxyde d'ammonium, dihydroxydes de métal alcalino-terreux, amines, oxydes métalliques, notamment oxyde de calcium, oxyde de magnésium et oxyde de zinc, et leurs mélanges.

12. Composition aqueuse comprenant un polymère d'au moins un monomère principal comprenant au moins une insaturation oléfinique polymérisable, dont la masse moléculaire Mw (déterminée par CES) est inférieure à 10 000 g/mol et dont l'indice de polydispersité Iₚ est inférieur à 3,5, obtenu selon le procédé d'une des revendications 1 à 11 et ne comprenant pas de composé organique volatil résiduel ou comprenant une quantité de sel choisi parmi sulfates, sulfites, phosphates, phosphites, hypophosphites qui est inférieure à 2 000 ppm, par rapport à la quantité de monomère principal.

13. Composition comprenant :
• au moins un monomère principal comprenant au moins une insaturation oléfinique polymérisable ;
• au moins un dérivé métallique, complexé, lié à au moins un ligand ou sous forme ionique et comprenant :
o au moins un élément (M) choisi parmi Cu^{I} et Cu^{II} ; ou
o au moins un composé précurseur d'un élément (M) ;
• au moins un composé aromatique (A) comprenant au moins une fonction (F) choisie parmi hydroxyle, amine primaire, amine secondaire et amine ternaire directement liée au cycle aromatique, en une quantité équivalente à au moins 300 ppm molaire de fonction (F) par rapport à la quantité molaire de monomère principal ; et
• d'au moins un composé initiateur choisi parmi peroxyde d'hydrogène, persulfate de sodium, persulfate de potassium, persulfate d'ammonium, hydroperoxyde d'alkyle et leurs mélanges.

14. Composition selon la revendication 13 comprenant au moins un monomère principal anionique et également de l'eau.

15. Utilisation d'une composition selon l'une des revendications 13 et 14 pour la préparation d'un polymère anionique hydrosoluble.

## Patentansprüche

1. Verfahren zur Herstellung eines wasserlöslichen Polymers mit einer Molekülmasse M_{w} (ermittelt mittels SEC) von 1.000 bis 10.000 g/mol und einem Polydispersitätsindex Iₚ von unter 3,5 durch Polymerisationsreaktion in Wasser, bei einer Temperatur von über 60°C, mindestens eines Hauptmonomers mit mindestens einer polymerisierbaren olefinischen Ungesättigtheit in Gegenwart von:
• mindestens einem komplexen Metallderivat, das an mindestens einen Liganden gebunden ist oder in ionischer Form vorliegt und umfasst:
o mindestens ein Element (M), ausgewählt aus Cu^{I} und Cu^{II}; oder
o mindestens eine Vorläuferverbindung eines Elements (M);
• mindestens einer aromatischen Verbindung (A) mit mindestens einer Funktion (F), ausgewählt aus Hydroxyl, primärem Amin, sekundärem Amin und tertiärem Amin, direkt an einen aromatischen Ring gebunden, in einer Menge, die mindestens 300 Mol ppm der Funktion (F), bezogen auf die Molmenge des Hauptmonomers, entspricht; und
• mindestens einer Initiatorverbindung, ausgewählt aus Wasserstoffperoxid, Natriumpersulfat, Kaliumpersulfat, Ammoniumpersulfat, Alkylhydroperoxid und Mischungen davon.

2. Verfahren nach Anspruch 1, wobei:
• die gewichtsbezogene Molekülmasse M_{w} des Polymers unter 9.000 g/mol, vorzugsweise unter 7.000 oder unter 6.000 g/mol, liegt; oder
• die gewichtsbezogene Molekülmasse M_{w} des Polymers über 1.200 g/mol, vorzugsweise über 1.500 g/mol, liegt; oder
• der Polydispersitätsindex Iₚ des Polymers unter 3 oder zwischen 2 und 3,5 oder zwischen 2 und 3 oder auch zwischen 2,2 und 3, zwischen 2,4 und 3, zwischen 2,6 und 3, oder aber zwischen 2,2 und 2,8 oder zwischen 2,2 und 2,6 liegt.

3. Verfahren nach einem der Ansprüche 1 und 2, mit Umsetzung:
• mindestens eines Metallderivats, ausgewählt aus Kupfercarbonat, hydriertem Kupfercarbonat, semihydriertem Kupfercarbonat, Kupferacetat, Kupfersulfat, Eisensulfat, hydriertem Eisensulfat, semihydriertem Eisensulfat, Eisencarbonat, hydriertem Eisencarbonat, semihydriertem Eisencarbonat, Kupferhydroxid; oder
• der aromatischen Verbindung (A) in einer Menge, die mindestens 325 Mol ppm, vorzugsweise mindestens 350 Mol ppm, der Funktion (F), bezogen auf die Molmenge des Hauptmonomers, entspricht.

4. Verfahren nach einem der Ansprüche 1 bis 3, mit Umsetzung:
• eines Elements (M) und mindestens eines Elements, ausgewählt aus Fe^{II}, Fe^{III}, Co^{II}, Mn^{II}, Ni^{II}; oder
• eines Elements (M) und mindestens einer Vorläuferverbindung eines Elements, ausgewählt aus Fe^{II}, Fe^{III}, Co^{II}, Mn^{II}, Ni^{II}; oder
• einer Vorläuferverbindung eines Elements (M); der
• einer Vorläuferverbindung eines Elements (M) und mindestens eines Elements, ausgewählt aus Fe^{II}, Fe^{III}, Co^{II}, Mn^{II}, Ni^{II}; oder
• einer Vorläuferverbindung eines Elements (M) und mindestens einer Vorläuferverbindung eines Elements, ausgewählt aus Fe^{II}, Fe^{III}, Co^{II}, Mn^{II}, Ni^{II}; oder
• eines Elements (M) und mindestens einer Vorläuferverbindung eines Elements, ausgewählt aus Fe^{II}, Fe^{III}, Co^{II}, Mn^{II}, Ni^{II} , gebunden an eine reduzierende Verbindung der Vorläuferverbindung; oder
• einer Vorläuferverbindung eines Elements (M), gebunden an eine reduzierende Verbindung der Vorläuferverbindung, oder
• einer Vorläuferverbindung eines Elements (M), gebunden an eine reduzierende Verbindung der Vorläuferverbindung, und mindestens eines Elements, ausgewählt aus Fe^{II}, Fe^{III}, Co^{II}, Mn^{II}, Ni^{II}; oder
• einer Vorläuferverbindung eines Elements (M) und mindestens einer Vorläuferverbindung eines Elements, ausgewählt aus Fe^{II}, Fe^{III}, Co^{II}, Mn^{II}, Ni^{II}, gebunden an eine reduzierende Verbindung der Vorläuferverbindung.

5. Verfahren nach einem der Ansprüche 1 bis 4, wobei die aromatische Verbindung (A) hydroxyliert ist und vorzugsweise ausgewählt ist aus Benzochinon, Hydrochinon, Catechol, Pyrocatechol, tert-Butylpyrocatechol, Gallussäure, Tanninsäure, tanninhaltigem Likör, 4-Hyroxybenzoesäure, 4-Aminophenol, Salicylsäure, Syringasäure, Dopamin oder Dopamin-HCl, Resorcinol, Lignosulfonat, Curcumin, Paramethoxyphenol, Anthocyanidine, Huminsäure und Mischungen davon.

6. Verfahren nach einem der Ansprüche 1 bis 5, wobei das Hauptmonomer ein anionisches Monomer ist, vorzugsweise ein anionisches Monomer mit mindestens einer polymerisierbaren olefinischen Ungesättigtheit, vorzugweise einer polymerisierbaren funktionellen Vinylgruppe, und mindestens einer Carbonsäure-Funktion, vorzugsweise ein anionisches Monomer, ausgewählt aus Acrylsäure und Methacrylsäure, einem Salz der Acrylsäure, einem Salz der Methacrylsäure, eventuell gebunden an eine Säure, ausgewählt aus Maleinsäure, Itaconsäure, Crotonsäure, einem Salz der Maleinsäure, einem Salz der Itaconsäure, einem Salz der Crotonsäure und deren Mischungen, noch mehr bevorzugt Acrylsäure.

7. Verfahren nach einem der Ansprüche 1 bis 6, wobei ebenfalls mindestens ein Comonomer umgesetzt wird, vorzugsweise ein Comonomer, ausgewählt aus AMPS, 2-Sulfoethylmethacrylat, Natriummethallylsulfonat, Styrolsulfonat, deren Salze, und ein nicht-ionisches Comonomer, vorzugweise ausgewählt aus den Estern einer Säure, ausgewählt aus Acrylsäure, Methacrylsäure, Maleinsäure, Itaconsäure, Crotonsäure und Mischungen davon, noch mehr bevorzugt Acrylsäure und Methacrylsäure.

8. Verfahren nach einem der Ansprüche 1 bis 7, das in Rohwasser oder in bipermutiertem Wasser umgesetzt wird.

9. Verfahren nach einem der Ansprüche 1 bis 8, wobei dieses Verfahren bei Abwesenheit eines Kettenübertragungsmittels durchgeführt wird oder wobei dieses Verfahren in einem wässrigen Medium oder in Abwesenheit eines organischen Lösungsmittels oder aber in einem wässrigen Medium und in Abwesenheit eines organischen Lösungsmittels hergestellt wird.

10. Verfahren nach einem der Ansprüche 1 bis 9, wobei das Reaktionsmedium nicht oder nur wenig, vorzugsweise einen Massenanteil unter 6.000 ppm, vorzugsweise unter 5.000 ppm oder unter 4.000 ppm, sogar unter 1.000 ppm, bezogen auf den Massenanteil des Hauptmonomers, an Salzen aufweist, ausgewählt aus Sulfaten, Sulfiten, Phosphaten, Phosphiten, Hypophosphiten.

11. Verfahren nach einem der Ansprüche 1 bis 10, ebenfalls umfassend die vollständige oder teilweise Neutralisierung des Polymers, vorzugsweise mit mindestens einer Verbindung, ausgewählt aus Alkalimetallhydroxiden, Erdalkalimetallhydroxiden, Ammoniumhydroxid, Erdalkalimetalldihydroxiden, Aminen, Metalloxiden, insbesondere Calciumoxid, Magnesiumoxid und Zinkoxid sowie Mischungen davon.

12. Wässrige Zusammensetzung, bestehend aus einem Polymer aus mindestens einem Hauptmonomer mit mindestens einer polymerisierbaren olefinischen Ungesättigtheit mit einer Molekülmasse M_{w} (ermittelt mittels SEC) unter 10.000 g/mol und einem Polydispersitätsindex Iₚ unter 3,5, das gemäß dem Verfahren nach einem der Ansprüche 1 bis 11 hergestellt wurde und keine flüchtigen organischen Verbindungsrückstände umfasst oder das einen Anteil an Salzen, ausgewählt aus Sulfaten, Sulfiten, Phosphaten, Phosphiten, Hydrophosphiten, unter 2.000 ppm, bezogen auf die Menge des Hauptmonomers, umfasst.

13. Zusammensetzung, umfassend:
• mindestens ein Hauptmonomer, das mindestens eine polymerisierbare olefinische Ungesättigtheit hat;
• mindestens ein komplexes Metallderivat, das an mindestens einen Liganden gebunden ist oder in ionischer Form vorliegt und umfasst:
o mindestens ein Element (M), ausgewählt aus Cu^{I} und Cu^{II}; oder
o mindestens eine Vorläuferverbindung eines Elements (M);
• mindestens eine aromatische Verbindung (A) mit mindestens einer Funktion (F), ausgewählt aus Hydroxyl, primärem Amin, sekundärem Amin und tertiärem Amin, direkt an einen aromatischen Ring gebunden, in einer Menge, die mindestens 300 Mol ppm der Funktion (F), bezogen auf die Molmenge des Hauptmonomers, entspricht; und
• mindestens eine Initiatorverbindung, ausgewählt aus Wasserstoffperoxid, Natriumpersulfat, Kaliumpersulfat, Ammoniumpersulfat, Alkylhydroperoxid und Mischungen davon.

14. Zusammensetzung nach Anspruch 13 mit mindestens einem anionischen Hauptmonomer sowie Wasser.

15. Verwendung einer Zusammensetzung nach einem der Ansprüche 13 und 14 für die Herstellung eines wasserlöslichen anionischen Polymers.

## Claims

1. Process for the preparation of a water-soluble polymer, the weight-average molecular mass M_{w} (determined by SEC) of which ranges from 1,000 to 10,000 g/mol and the polydispersity index Iₚ of which is less than 3.5, by polymerization reaction in water, at a temperature of greater than 60°C, of at least one main monomer comprising at least one polymerizable olefinic unsaturation, in the presence:
• of at least one metal derivative which is complexed, bonded to at least one ligand or in the ionic form and comprising:
∘ at least one element (M) chosen from Cu^{I} and Cu^{II}; or
∘ at least one precursor compound of an element (M);
• of at least one aromatic compound (A) comprising at least one functional group (F) chosen from hydroxyl, primary amine, secondary amine and tertiary amine directly bonded to the aromatic ring, in an amount equivalent to at least 300 molar ppm of functional group (F) with respect to the molar amount of main monomer; and
• at least one initiator compound chosen from hydrogen peroxide, sodium persulfate, potassium persulfate, ammonium persulfate, alkyl hydroperoxide and their mixtures.

2. Process according to Claim 1, for which:
• the weight-average molecular mass M_{w} of the polymer is less than 9,000 g/mol, preferably less than 7,000 g/mol or less than 6,000 g/mol; or
• the weight-average molecular mass M_{w} of the polymer is greater than 1,200 g/mol, preferably greater than 1,500 g/mol; or
• the polydispersity index Iₚ of the polymer is less than 3 or is between 2 and 3.5 or between 2 and 3 or else between 2.2 and 3, between 2.4 and 3, between 2.6 and 3, or alternatively between 2.2 and 2.8 or between 2.2 and 2.6.

3. Process according to either of Claims 1 and 2, comprising the use:
• of at least one metal derivative chosen from copper carbonate, copper carbonate hydrate, copper carbonate hemihydrate, copper acetate, copper sulfate, iron sulfate, iron sulfate hydrate, iron sulfate hemihydrate, iron carbonate, iron carbonate hydrate, iron carbonate hemihydrate or copper hydroxide; or
• of the aromatic compound (A) in an amount equivalent to at least 325 molar ppm, preferably to at least 350 molar ppm, of functional group (F), with respect to the molar amount of main monomer.

4. Process according to one of Claims 1 and 3, employing:
• an element (M) and at least one element chosen from Fe^{II}, Fe^{III}, Co^{II}, Mn^{II}, Ni^{II}; or
• an element (M) and at least one precursor compound of an element chosen from Fe^{II}, Fe^{III}, Co^{II}, Mn^{II}, Ni^{II}; or
• a precursor compound of an element (M); or
• a precursor compound of an element (M) and at least one element chosen from Fe^{II}, Fe^{III}, Co^{II}, Mn^{II}, Ni^{II}; or
• a precursor compound of an element (M) and at least one precursor compound of an element chosen from Fe^{II}, Fe^{III}, Co^{II}, Mn^{II}, Ni^{II}; or
• an element (M) and at least one precursor compound of an element chosen from Fe^{II}, Fe^{III}, Co^{II}, Mn^{II}, Ni^{II} combined with a compound which reduces the precursor compound; or
• a precursor compound of an element (M) combined with a compound which reduces the precursor compound; or
• a precursor compound of an element (M) combined with a compound which reduces the precursor compound and at least one element chosen from Fe^{II}, Fe^{III}, Co^{II}, Mn^{II}, Ni^{II}; or
• a precursor compound of an element (M) and at least one precursor compound of an element chosen from Fe^{II}, Fe^{III}, Co^{II}, Mn^{II}, Ni^{II} combined with a compound which reduces the precursor compound.

5. Process according to one of Claims 1 to 4, for which the aromatic compound (A) is hydroxylated and is preferably chosen from benzoquinone, hydroquinone, catechol, pyrocatechol, tertio-butylpyrocatechol, gallic acid, tannic acid, tannic liquor, 4-hydroxybenzoic acid, 4-aminophenol, salicylic acid, syringic acid, dopamine or dopamine-HCl, resorcinol, lignosulfonate, curcumin, para-methoxyphenol, anthocyanidols, humic acid and their mixtures.

6. Process according to one of Claims 1 to 5, for which the main monomer is an anionic monomer, preferably an anionic monomer comprising at least one polymerizable olefinic unsaturation, preferably a polymerizable vinyl functional group, and at least one carboxylic acid functional group; preferably, the anionic monomer is chosen from acrylic acid, methacrylic acid, an acrylic acid salt, a methacrylic acid salt, optionally combined with an acid chosen from maleic acid, itaconic acid, crotonic acid, a maleic acid salt, an itaconic acid salt, a crotonic acid salt and their mixtures, more preferably acrylic acid.

7. Process according to one of Claims 1 to 6, also comprising the use of at least one comonomer, preferably of at least one comonomer chosen from AMPS, 2-sulfoethyl methacrylate, sodium methallyl sulfonate, styrene sulfonate, their salts and a non-ionic comonomer, more preferably chosen from the esters of an acid chosen from acrylic acid, methacrylic acid, maleic acid, itaconic acid, crotonic acid and their mixtures, more preferably still acrylic acid and methacrylic acid.

8. Process according to one of Claims 1 to 7, carried out in raw water or in deionized water.

9. Process according to one of Claims 1 to 8, carried out in the absence of chain-transfer agent; or carried out in an aqueous medium or in the absence of organic solvent or carried out in an aqueous medium and in the absence of organic solvent.

10. Process according to one of Claims 1 to 9, for which the reaction medium comprises nothing or little, preferably comprises a mass amount of less than 6,000 ppm, preferably of less than 5,000 ppm or than 4,000 ppm, indeed even of less than 1,000 ppm, with respect to the mass amount of main monomer, in the way of salt chosen from sulfates, sulfites, phosphates, phosphites, hypophosphites.

11. Process according to one of Claims 1 to 10, also comprising the complete or partial neutralization of the polymer, preferably by means of at least one compound chosen from alkali metal hydroxides, alkaline earth metal hydroxides, ammonium hydroxide, alkaline earth metal dihydroxides, amines, metal oxides, in particular calcium oxide, magnesium oxide and zinc oxide, and their mixtures.

12. Aqueous composition comprising a polymer of at least one main monomer comprising at least one polymerizable olefinic unsaturation, the molecular mass M_{W} (determined by SEC) of which is less than 10,000 g/mol and the polydispersity index Iₚ of which is less than 3.5, obtained according to the process of one of Claims 1 to 11 and not comprising a residual volatile organic compound or comprising an amount of salt chosen from sulfates, sulfites, phosphates, phosphites or hypophosphites with is less than 2,000 ppm, with respect to the amount of main monomer.

13. Composition comprising:
• at least one main monomer comprising at least one polymerizable olefinic unsaturation;
• at least one metal derivative which is complexed, bonded to at least one ligand or in the ionic form and comprising:
o at least one element (M) chosen from Cu^{I} and Cu^{II}; or
o at least one precursor compound of an element (M);
• at least one aromatic compound (A) comprising at least one functional group (F) chosen from hydroxyl, primary amine, secondary amine and tertiary amine directly bonded to the aromatic ring, in an amount equivalent to at least 300 molar ppm of functional group (F) with respect to the molar amount of main monomer; and
• at least one initiator compound chosen from hydrogen peroxide, sodium persulfate, potassium persulfate, ammonium persulfate, alkyl hydroperoxide and their mixtures.

14. Composition according to Claim 13, comprising at least one anionic main monomer and also water.

15. Use of a composition according to either of Claims 13 and 14 in the preparation of a water-soluble anionic polymer.
